# EUROPEAN PATENT SPECIFICATION

(11) **EP 2 437 555 B1**
(45) Date of publication and mention of the grant of the patent: **11.09.2013**
(21) Application number: 11008039.7
(22) Date of filing: 04.10.2011
(51) Int. Cl.: H04W 60/06, H04W 76/00

(54) **Network initiated detach with reattach**
Netzinitiierte Trennung mit Wiederverbindung
Séparation initié de réseau avec reconnexion

(30) Priority: 04.10.2010 US 389288 P
(43) Date of publication of application: 04.04.2012
(73) Proprietor: HTC Corporation, Taoyuan County 330 (TW)
(72) Inventor: Tiwari, Kundan, Taoyuan City Taoyuan County 330 (TW)
(74) Representative: Ljungberg, Robert

(56) References cited:
- "3rd Generation Partnership Project; Technical Specification Group Core Network and Terminals; Mobile radio interface Layer 3 specification; Core network protocols; Stage 3 (Release 10)", 3GPP STANDARD; 3GPP TS 24.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 28 September 2010 (2010-09-28), pages 1-616, XP050442264, [retrieved on 2010-09-28]
- "3rd Generation Partnership Project; Technical Specification Group Core Network and Terminals; Non-Access-Stratum (NAS) protocol for Evolved Packet System (EPS); Stage 3 (Release 10)", 3GPP STANDARD; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 28 September 2010 (2010-09-28), pages 1-299, XP050442274, [retrieved on 2010-09-28]
- "3rd Generation Partnership Project; Technical Specification Group Services and System Aspects; General Packet Radio Service (GPRS); Service description; Stage 2 (Release 10)", 3GPP STANDARD; 3GPP TS 23.060, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 29 September 2010 (2010-09-29), pages 1-310, XP050442313, [retrieved on 2010-09-29]

## Description

### Background of the Invention

### 1. Field of the Invention

The present invention relates to a method utilized in a wireless communication system, and more particularly, to a method of handling network initiated detach procedure in a wireless communication system.

### 2. Description of the Prior Art

Universal mobile telecommunications system (UMTS) provides both circuit switching (CS) and packet switching (PS) services. In UMTS, the network is referred to as a universal terrestrial radio access network (UTRAN), comprising a plurality of base stations (Node-Bs) and Radio Network Controllers (RNCs), whereas the mobile devices are referred to as user equipments (UEs).

In UMTS, before accessing a service (e.g. an emergency bearer service) in an external network (e.g. a packet data network (PDN)), the UE needs to perform a packet data protocol (PDP) context activation procedure to activate a PDP context to a belonging serving general packet radio service (GPRS) support node (SGSN) and a specific gateway GPRS support node (GGSN), which can support the service. The PDP context activation procedure is used to activate the default PDP context for a given PDP address and Access Point Name (APN), whereas all additional contexts associated to the same PDP address and APN are activated with the secondary PDP context activation procedure.

More specifically, the UE attached for emergency bearer services shall establish a PDN connection for the emergency bearer services, and requests a PDP context with request type set to "emergency". If there is already a PDN connection for emergency bearer services established, the UE shall not request an additional PDN connection (i.e. initiate a secondary PDP context activation procedure) for emergency bearer services unless triggered by the network.

On the other hand, the network initiates a GPRS detach procedure by sending a DETACH REQUEST message to the UE. The DETACH REQUEST message shall include a detach type IE. In addition, the network may include a cause IE to specify the reason for the detach request. If the detach type IE indicates "re-attach required", or "re-attach not required" and the cause code is not #2 "IMSI unknown in HLR", the network shall deactivate the PDP contexts, the MBMS contexts and deactivate the logical link(s), if any, and shall change to state GMM-DEREGISTERED-INITIATED. When receiving the DETACH REQUEST message and the detach type IE indicates "re-attach required", the UE shall deactivate the PDP contexts, the MBMS contexts and deactivate the logical link(s), if any. The MS shall then send a DETACH ACCEPT message to the network and shall change state to GMM-DEREGISTERED. The UE shall, after the completion of the GPRS detach procedure, initiate a GPRS attach procedure. The UE should also activate PDP context(s) to replace any previously active PDP context(s).

According to the specification for the UMTS, when an UE receives a DETACH REQUEST message with detach type "re-attach required", the UE performs attach procedure and then activate any previously active PDP contexts. However, for the UE having PDN connection for emergency bearer service, if the UE performs an attach procedure for a normal service and activates PDP context for the normal service first after the completion of the detach procedure, the PDP context activation for emergency bearer service may be delayed. This may cause life-safety hazard.

In addition, as abovementioned, the UE is not allowed to activate the secondary PDP context for emergency bearer service unless triggered by the network. According to the specification for the UMTS, when an UE receives a DETACH REQUEST message with detach type "re-attach required", the UE performs attach procedure and activates any previously active PDP contexts. However, if the UE activates the secondary PDP context for the emergency bearer service (e.g. due to previously active PDP contexts includes a secondary PDP context for emergency bearer service initiated by the network), it will be reject by the network, thereby causing unnecessary signaling.

As can be seen from the above, since the UMTS does not clearly specify what procedure shall be performed after completion of the detach procedure, unnecessary signaling or emergency bearer service delay occurs.

A standardization publication 3GPP TS 24.008 V10.0.0 (2010-09-28) "3rd Generation Partnership Project; Technical Specification Group Core Network and Terminals; Mobile radio interface Layer 3 specification; Core network protocols; Stage 3 (Release 10) discusses useful information for understanding the background of the invention.

### SUMMARY

It is therefore an objective of the present invention to provide a method, a mobile device and a computer program product for attaching for emergency bearer service after a network initiated detach procedure. This object can be achieved by the features of the independent claims 1, 3 and 4. Further embodiments are characterized by the dependent claims.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system.

Fig. 2 is a schematic diagram of an exemplary communication device according to an embodiment.

Fig. 3 is a flowchart of an example process .

Fig. 4 is a flowchart of an exemplary process according to an embodiment.

Fig. 5 is a flowchart of an example process .

### Detailed Description

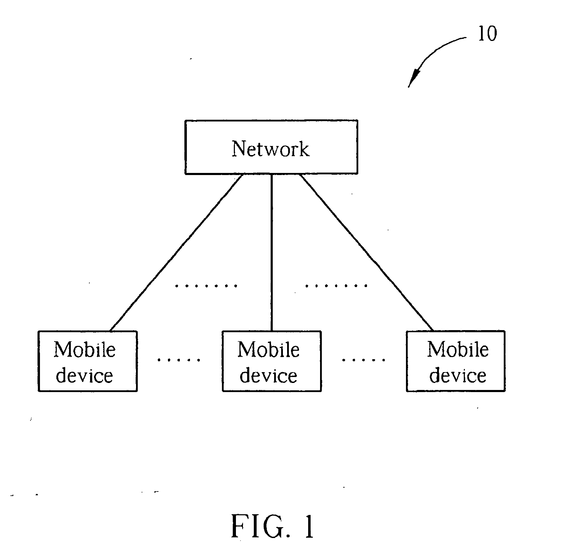

Please refer to Fig. 1, which illustrates a schematic diagram of a wireless communication system 10. Briefly, the wireless communication system 10 is composed of a network and a plurality of mobile devices. In Fig. 1, the network and the mobile devices are simply utilized for illustrating the structure of the wireless communication system 10. The wireless communication system 10 can be a Global System for Mobile communications (GSM), or universal mobile telecommunications system (UMTS). For example, if the wireless communication system 10 is an UMTS system, the network can be referred to as an Universal Terrestrial Radio Access Network (UTRAN) comprising a plurality of base stations (NodeBs), whereas the mobile devices are referred to as user equipments (UEs). The UEs can be devices such as mobile phones, computer systems, etc. Furthermore, the network and the UE can be seen as a transmitter or a receiver according to a transmission direction, e.g., for uplink (UL), the UE is the transmitter and the network is the receiver, and for downlink (DL), the network is the transmitter and the UE is the receiver.

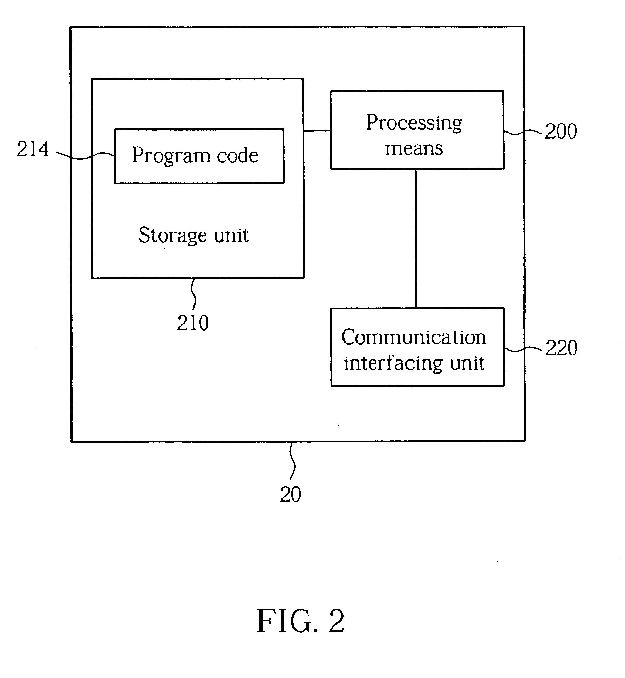

Fig. 2 illustrates a schematic diagram of an exemplary communication device 20. The communication device 20 may be the mobile device shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

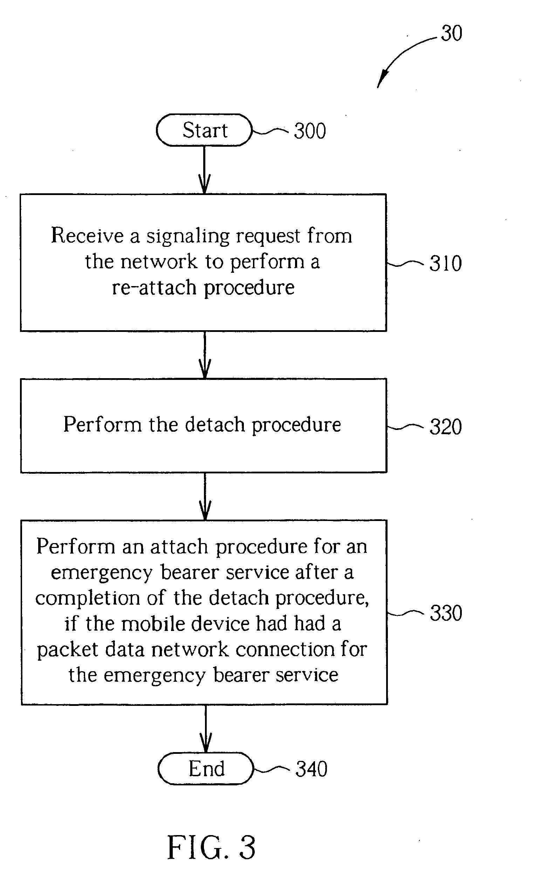

Please refer to Fig. 3, which is a flowchart of an example process 30. The process 30 is utilized for a UE (as the mobile device of Fig. 1) for a detach procedure initiated by the network (e.g. NodeB) in the wireless communication system 10. The process 30 can be compiled into the program code 214 and includes the following steps:

Step 300: Start.

Step 310: Receive a signaling request from the network to perform a re-attach procedure

Step 320: Perform the detach procedure.

Step 330: Perform an attach procedure for an emergency bearer service after a completion of the detach procedure, if the mobile device had had a packet data network connection for the emergency bearer service.

Step 340: End.

According to the process 30, when the UE having a packet data network (PDN) connection for the emergency bearer service receives the detach request message with detach type "re-attach required" or a paging message with International Mobile Subscriber Identity (IMSI), the UE performs the attach procedure for the emergency bearer service (i.e. via an attach request message with attach type "emergency attach") after the detach procedure. With emergency attach procedure, the UE establishes the PDN connection for the emergency bearer service by activating a default packet data protocol (PDP) context for the emergency bearer service. In other words, the UE does not first perform a normal attach procedure and activate a PDP context for normal service after the detach procedure. Thus, the emergency bearer service will not be delayed.

In addition, the UE is prohibited to activate any previously secondary PDP context for the emergency bearer service after the detach procedure. Thus, unnecessary singling for the secondary PDP context activation procedure is avoided.

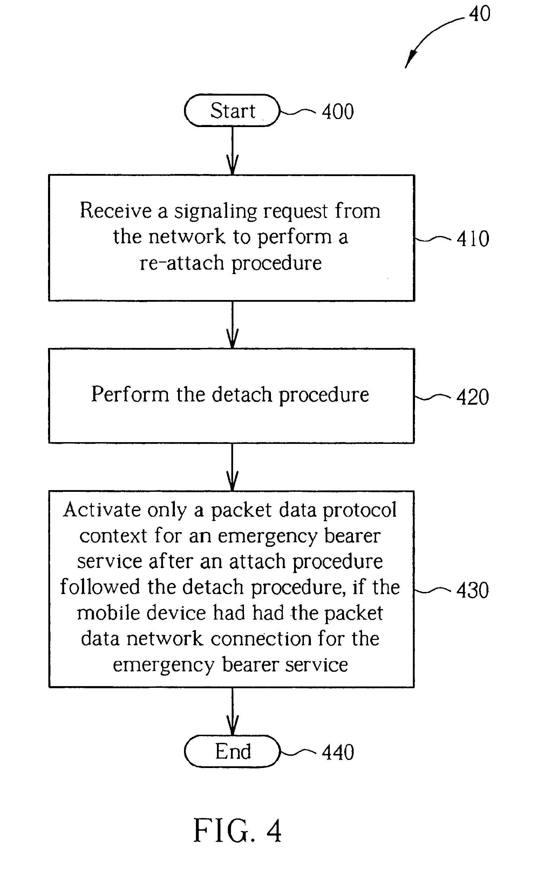

Please refer to Fig. 4, which is a flowchart of an process 40 of the present invention. The process 40 is utilized for a UE (as the mobile device of Fig. 1) for a detach procedure initiated by the network (e.g. NodeB) in the wireless communication system 10. The process 40 can be compiled into the program code 214 and includes the following steps:

Step 400: Start.

Step 410: Receive a signaling request from the network to perform a re-attach procedure. Step 420: Perform the detach procedure.

Step 430: Activate only a packet data protocol context for an emergency bearer service after an attach procedure followed the detach procedure, if the mobile device had had the packet data network connection for the emergency bearer service.

Step 440: End.

According to the process 40, when the UE having a packet data network (PDN) connection for the emergency bearer service receives the detach request message with detach type "re-attach required" or a paging message with International Mobile Subscriber Identity (IMSI), the UE performs the attach procedure after completing the detach procedure. In addition, after completing the attach procedure (e.g. a normal attach procedure), the UE actives the PDP context for emergency bearer service only. In other words, the UE does not activate any other previously active PDP context not for the emergency bearer service. Thus, the emergency bearer service will not be delayed.

In addition, the UE considers itself attached for emergency bearer service only.

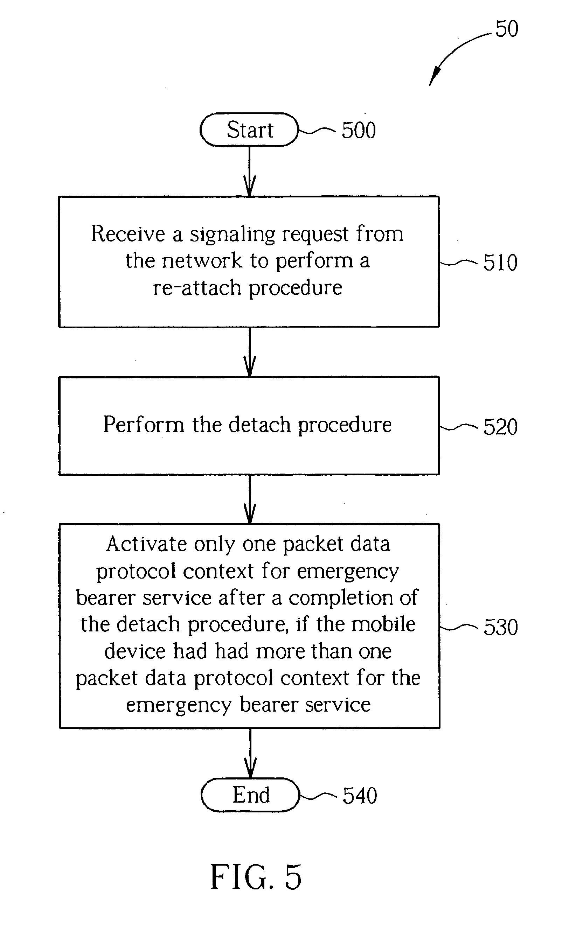

Please refer to Fig. 5, which is a flowchart of an example process 50. The process 50 is utilized for a UE (as the mobile device of Fig. 1) for a detach procedure initiated by the network (e.g. NodeB) in the wireless communication system 10. The process 50 can be compiled into the program code 214 and includes the following steps:

Step 500: Start.

Step 510: Receive a signaling request from the network to perform a re-attach procedure.

Step 520: Perform the detach procedure.

Step 530: Activate only one packet data protocol (PDP) context for emergency bearer service after a completion of the detach procedure, if the mobile device had had more than one PDP context for the emergency bearer service.

Step 540: End.

According to the process 50, when the UE having more than one PDP context for the emergency bearer service (e.g. a default PDP context and a secondary PDP context for the emergency bearer service, which is activated by the network) receives the detach request message with detach type "re-attach required" or a paging message with International Mobile Subscriber Identity (IMSI), the UE performs the attach procedure after completing the detach procedure, and activates only one PDP context for the emergency bearer service. In a word, the UE does not or is prohibit activate the secondary PDP context for the emergency bearer service, so as to avoid a secondary PDP context activation rejection from the network, and unnecessary signaling.

Please note that, the abovementioned steps of the processes 30 to 90 including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (SiP), computer on module (COM), and the communication device 20.

In conclusion, the exemplary examples and means are provided for handling network initiated detach procedure, so as to avoid unnecessary signaling and emergency bearer service delay.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a detach procedure initiated by a network, for a mobile device (20) in a wireless communication system (10), the method comprising:
receiving (410) a signalling request from the network to perform a re-attach procedure;
performing (420) the detach procedure; **characterized by**
activating (430) only a packet data protocol, PDP, context for an emergency bearer service after an attach procedure followed the detach procedure, if the mobile device had had a packet data network, PDN, connection for the emergency bearer service and not activating any other previously active PDP context not for the emergency bearer service.

2. The method of claim 1, further comprising:
determining attached for the emergency bearer service only.

3. A computer program product (214), comprising computer program code means configured to perform the method of claim 1 when executed.

4. A mobile device (20), comprising:
a processing means (200);
a storage unit (210) configured to store the program code (214) of claim 3 for access by the processing means (200).

5. The mobile device of claim 4, wherein the mobile device comprises a mobile phone.

## Patentansprüche

1. Ein Verfahren zur Handhabung eines von einem Netzwerk initiierten Trennungsvorgangs für ein mobiles Gerät (20) in einem drahtlosen Kommunikationssystem (10), wobei das Verfahren Folgendes beinhaltet:
Empfangen (410) einer Signalisierungsaufforderung von dem Netzwerk, einen Wiederverbindungsvorgang durchzuführen;
Durchführen (420) des Trennungsvorgangs; **gekennzeichnet durch** das Aktivieren (430) nur eines Paketdatenprotokoll(PDP)-Kontexts für einen Notfall-Trägerdienst, nachdem auf den Trennungsvorgang ein Verbindungsvorgang gefolgt ist,
wenn das mobile Gerät eine Paketdatennetz(PDN)-Verbindung für den Notfall-Trägerdienst hatte, und kein Aktivieren eines anderen zuvor aktiven PDP-Kontexts, der nicht für den Notfall-Trägerdienst ist.

2. Verfahren gemäß Anspruch 1, das ferner Folgendes beinhaltet:
Bestimmen einer Verbindung nur für den Notfall-Trägerdienst.

3. Ein Computerprogramm-Produkt (214), das ein Computerprogrammcodemittel beinhaltet, das konfiguriert ist, um bei Ausführung das Verfahren gemäß Anspruch 1 durchzuführen.

4. Ein mobiles Gerät (20), das Folgendes beinhaltet:
ein Verarbeitungsmittel (200);
eine Speichereinheit (210), die konfiguriert ist, um den Programmcode (214) gemäß Anspruch 3 für den Zugriff durch das Verarbeitungsmittel (200) zu speichern.

5. Mobiles Gerät gemäß Anspruch 4, wobei das mobile Gerät ein Mobiltelefon beinhaltet.

## Revendications

1. Un procédé de gestion d'une procédure de détachement initiée par un réseau, pour un dispositif mobile (20) dans un système de communication sans fil (10), le procédé comprenant :
recevoir (410) de réseau une demande de signalisation pour réaliser une procédure de rattachement ;
réaliser (420) la procédure de détachement ; **caractérisé par** le fait d'activer (430) seulement un contexte de protocole de données en paquet, PDP, pour un service support d'urgence après qu'une procédure d'attachement a suivi la procédure de détachement, si le dispositif mobile avait une connexion au réseau de données en paquet, PDN, pour le service support d'urgence et de n'activer aucun autre contexte PDP précédemment actif qui ne soit pas pour le service support d'urgence.

2. Le procédé de la revendication 1, comprenant en outre :
déterminer comme étant attaché pour le service support d'urgence seulement.

3. Un produit programme informatique (214), comprenant un moyen code programme informatique configuré pour réaliser le procédé de la revendication 1 lorsqu'exécuté.

4. Un dispositif mobile (20), comprenant :
un moyen de traitement (200) ;
une unité de stockage (210) configurée pour stocker le code programme (214) de la revendication 3 pour accès par le moyen de traitement (200).

5. Le dispositif mobile de la revendication 4, dans lequel le dispositif mobile comprend un téléphone mobile.
